(19) Europäisches Patentamt / European Patent Office / Office européen des brevets

(11) **EP 3 437 292 B1**

(12) **FASCICULE DE BREVET EUROPEEN**

(45) Date de publication et mention de la délivrance du brevet:
**17.07.2019 Bulletin 2019/29**

(21) Numéro de dépôt: **17714755.0**

(22) Date de dépôt: **31.03.2017**

(51) Int Cl.:
***H04L 29/06*** *(2006.01)*

(86) Numéro de dépôt international:
**PCT/EP2017/057677**

(87) Numéro de publication internationale:
**WO 2017/167958 (05.10.2017 Gazette 2017/40)**

(54) **PROCEDE D'OPTIMISATION DU DEBIT DE CONTENUS MULTIMEDIA ACCESSIBLES PAR AU MOINS UN TERMINAL UTILISATEUR, PRODUIT PROGRAMME D'ORDINATEUR ET DISPOSITIF DE GESTION CORRESPONDANTS**

VERFAHREN ZUR OPTIMIERUNG DES DURCHSATZES VON MULTIMEDIA-INHALTEN, AUF DIE VON MINDESTENS EINEM BENUTZERGERÄT ZUGEGRIFFEN WERDEN KANN, ZUGEHÖRIGES COMPUTERPROGRAMMPRODUKT UND VERWALTUNGSVORRICHTUNG

METHOD FOR OPTIMIZING THE THROUGHPUT OF MULTIMEDIA CONTENTS ACCESSIBLE BY AT LEAST ONE USER TERMINAL, CORRESPONDING COMPUTER PROGRAM PRODUCT AND MANAGEMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2016 FR 1652901**

(43) Date de publication de la demande:
**06.02.2019 Bulletin 2019/06**

(73) Titulaires:
• **Orange**
  **75015 Paris (FR)**
• **Université de Rennes 1**
  **35065 Rennes Cedex (FR)**

(72) Inventeurs:
• **LI, Yue**
  **94200 IVRY-SUR-SEINE (FR)**
• **BERTIN, Philippe**
  **35690 Acigne (FR)**
• **HADJADJ-AOUL, Yassine**
  **35500 Vitre (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2013/017165     US-A1- 2011 082 924
US-A1- 2012 124 179**

• **"3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH) (Release 13)", 3GPP STANDARD; 3GPP TS 26.247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V13.2.0, 5 décembre 2015 (2015-12-05), pages 1-93, XP051046559,**

## Description

## 1 DOMAINE TECHNIQUE

Le domaine de l'invention est celui des réseaux de radiocommunications aptes à délivrer un contenu multimédia à des terminaux utilisateur.

Plus précisément, l'invention concerne un procédé d'optimisation du débit binaire des contenus multimédia accessibles par les terminaux connectés à une cellule du réseau de radiocommunications en question.

L'invention a de nombreuses applications, notamment, mais non exclusivement, dans le domaines des réseaux de radiocommunications mobiles, par exemple les réseaux cellulaires conformes aux normes 3GPP (pour « 3rd Generation Partnership Project » en anglais).

## 2 ARRIERE-PLAN TECHNOLOGIQUE

La technique de diffusion en flux adaptatif dynamique sur protocole de transfert hypertexte, ou technique DASH (pour « Dynamic Adaptive Streaming over HTTP » en anglais, avec HTTP pour « HyperText Transfer Protocol ») est l'une des technologies existantes permettant la diffusion de contenus multimédia sur un réseau de communication.

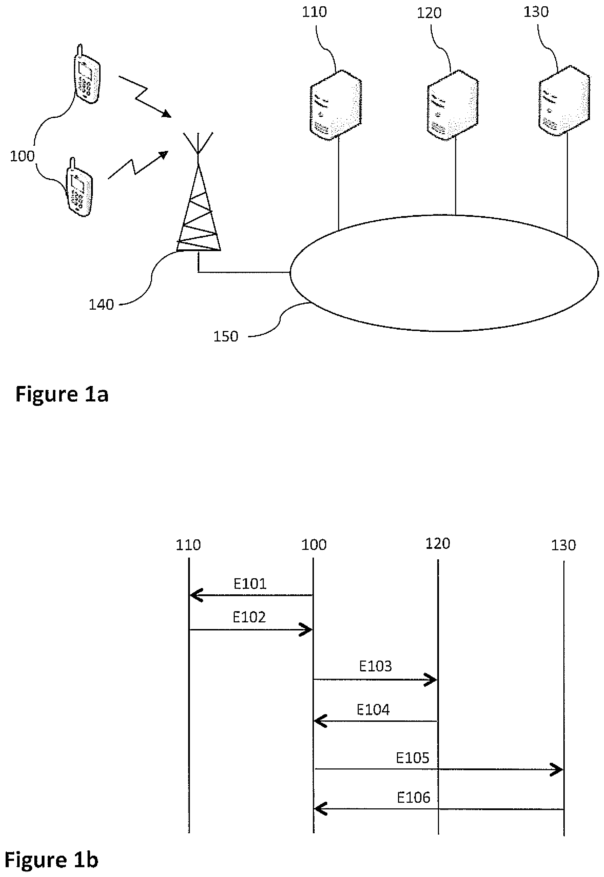

A titre illustratif de cette technologie, les **figures 1a et 1b** présentent une configuration connue où un client DASH est embarqué dans un terminal utilisateur 100, par exemple un terminal mobile connecté à un noeud d'accès 140 d'un réseau mobile, par exemple une station de base d'un réseau cellulaire du type 2G, 3G, 4G, etc.

Lors d'une étape E101, le terminal utilisateur 100 s'identifie auprès d'un serveur d'identification 110 d'un fournisseur de contenus multimédia. Si le terminal 100 n'est pas connu, il peut également s'agir d'une étape d'inscription auprès de ce fournisseur de contenus.

Lors d'une étape E102, le serveur d'identification 110 confirme son identification réussie au terminal utilisateur 100, ou, le cas échéant son inscription.

Pour ce faire, les échanges entre entités peuvent transiter par différents serveurs compris dans le coeur de réseau 150, par exemple un serveur SGW (pour « Serving Gateway » en anglais) ou un serveur PGW (pour « Packet Data Network Gateway » en anglais).

Lors d'une étape E103, le terminal utilisateur 100 envoie une requête DASH à un serveur de gestion 120 du fournisseur de contenus multimédia. Plus précisément, cette requête concerne un fichier de description multimédia, ou fichier manifeste, dit MPD (pour « Media Présentation Description » en anglais), correspondant à un contenu multimédia particulier que l'utilisateur du terminal utilisateur 100 recherche (que ce soit pour le télécharger et l'exploiter ultérieurement, ou bien pour l'exploiter immédiatement en mode « diffusion », ou « streaming » en anglais).

En effet, la technologie DASH prévoit qu'un contenu multimédia donné, par exemple un contenu vidéo ou sonore, est disponible sous forme de segments, appelés chuncks, correspondant chacun à une certaine durée du contenu multimédia en question. Différents segments peuvent correspondre à une même fraction du contenu multimédia, i.e. à un même passage du contenu vidéo ou sonore en question, mais avec chacun une qualité différente, cette qualité correspondant à un débit binaire de codage différent, par exemple à cause d'une résolution différente ou d'un système d'encodage différent.

Lors d'une étape E104, le fichier manifeste MPD correspondant au contenu multimédia recherché est retourné au terminal utilisateur 100.

Le client DASH installé sur le terminal utilisateur 100 interprète alors le fichier MPD reçu et sélectionne des segments du contenu multimédia voulu qui présentent une qualité, et donc un débit binaire au final, en adéquation avec son besoin (e.g. la taille et la résolution de l'écran du terminal s'il s'agit d'un contenu vidéo).

Lors d'une étape E105, le terminal utilisateur 100 envoie une autre requête, pour obtenir les segments préalablement sélectionnés, auprès d'un serveur de contenus multimédia 130 appartenant à un réseau de diffusion de contenus, ou CDN (pour « Content Delivery Network » en anglais), du fournisseur de contenus multimédia. Ce dernier retourne alors le ou les segment(s) demandé(s) lors d'une étape E106, ce ou ce(s) segment(s) correspondant à la qualité, et donc à un débit binaire, sélectionnée par le client DASH installé sur le terminal utilisateur 100.

Ainsi, dans l'approche existante, les clients DASH interprètent des fichiers MPD représentatifs du contenu de serveurs de fournisseurs de contenus multimédia et sélectionnent dynamiquement la qualité, et donc le débit binaire, la plus favorable à leur propre besoin, i.e. sans tenir compte du besoin d'autres utilisateurs. Ce comportement, qui ne pose pas de problème particulier dans les applications filaires où chaque utilisateur dispose d'un canal de transmission distinct, devient problématique dans un système de radiocommunications cellulaires dans lequel plusieurs utilisateurs connectés à la même cellule de réseau partagent une ressource radio unique, cette ressource étant finie. Ce comportement peut effectivement conduire à une répartition inéquitable de la bande passante disponible pour les différents utilisateurs connectés à une même cellule réseau, notamment lors de la congestion de cette dernière.

En outre, les clients DASH estiment souvent la bande passante réseau de manière inexacte. Par conséquent, la décision de sélection de la qualité et du débit binaire associé faite par les clients DASH est souvent sous-optimale, ce qui provoque une dégradation de la qualité globale ressentie par l'ensemble des utilisateurs.

Cette problématique est exacerbée dans les technologies cellulaires modernes, comme la technologie 4G, pour lesquelles les applications utilisateurs sont de plus en plus orientées multimédia, et pour lesquelles les quantités de données transférées sont de plus en plus importantes.

Par ailleurs, il existe des fluctuations importantes de la bande passante réseau dans une cellule de réseau de radiocommunications liées à des conditions de propagation changeantes. Ceci contribue également à la difficulté d'estimer la bande passante réseau pour de telles applications.

Cependant, la technologie d'informatique de bord (ou bordure ou périphérie) de réseau cellulaire, technologie dite MEC (pour « Mobile Edge Computing » en anglais), en cours de standardisation auprès de l'ETSI (pour « European Telecommunications Standards Institute » en anglais), offre la possibilité de tirer parti d'une localisation en bord de réseau cellulaire pour optimiser des applications dédiées aux utilisateurs d'un tel réseau cellulaire. Pour ce faire, la technologie MEC propose d'introduire des serveurs MEC dédiés. De tels serveurs MEC sont implantés au contact des stations de base gérant la partie radio des réseaux cellulaires, par exemple les eNodeB dans la technologie 4G, pour permettre d'héberger des applications dédiées et leur donner la flexibilité de pouvoir gérer le trafic de, et vers, les utilisateurs mobiles, ainsi que la possibilité d'accéder à des informations en temps réel sur le fonctionnement de la partie radio du réseau. Ces applications peuvent être gérées soit directement par l'opérateur de réseau, soit par des tierces parties, par exemple des fournisseurs de contenus.

Il apparaît ainsi que la technologie MEC pourrait être adaptée à la problématique de gérer les débits de diffusion de contenu multimédia dans un réseau cellulaire et dans un environnement multiutilisateurs.

Certains travaux ont récemment été effectués sur le sujet. En particulier, la méthode décrite dans l'article de J. Fajardo, I. Taboada, and F. Liberal, « Improving content delivery efficiency through multi-layer mobile edge adaptation, » Network, IEEE, vol. 29, no. 6, pp. 40-46, Nov 2015, propose une approche de réseau mobile assisté sur la base d'un protocole HTTP adaptatif en continu avec un codage multi-couche et les outils MEC. En particulier, une fonction d'adaptation « Mobile Edge-DASH » situé au sein du réseau d'accès radio en nuage , ou C-RAN (pour « Centralized-Radio Access Network » en anglais), est introduite pour combiner le contexte réseau, le contexte de l'utilisateur et l'état de la cellule. Cependant, cette approche ne résout pas la problématique décrite ci-dessus liée au comportement des clients DASH qui sélectionnent la qualité des segments proposés dans les fichiers MPD sur la seule base de leurs propres besoins et capacités.

Le document US 2012/124179 divulgue un procédé d'optimisation du débit de contenu multimédia accessibles par une pluralité de terminaux utilisateur connectés à une cellule de réseau de radiocommunications.

Plus généralement, il n'existe pas encore de mécanisme permettant de maximiser la qualité d'expérience globale des clients DASH situés dans une même cellule de réseau de radiocommunications.

Il existe ainsi un besoin pour améliorer l'expérience utilisateur lors de l'accès simultané à des contenus multimédia disponibles sur des serveurs distants par des terminaux partageant une même ressource radiofréquence limitée d'un réseau de radiocommunications du type cellulaire, notamment en évitant les congestions du réseau.

Il existe également un besoin pour que le partage des ressources radiofréquences entre les différents utilisateurs s'adapte en temps réel aux conditions opérationnelles de la cellule de réseau.

## 3 RESUME

Dans un mode de réalisation de l'invention, il est proposé un procédé d'optimisation du débit de contenus multimédia accessibles par une pluralité de terminaux utilisateur connectés à une cellule de réseau de radiocommunication, lesdits contenus multimédia étant stockés sous la forme d'une pluralité de segments indépendants sur au moins un serveur de contenus multimédia associé à au moins un fournisseur de contenu. Un tel procédé de gestion du débit comprend les étapes suivantes, mises en oeuvre dans un dispositif d'optimisation du débit :

- réception d'au moins une requête pour obtenir au moins un fichier représentatif d'au moins une qualité disponible correspondant à un débit pour au moins un segment d'au moins un desdits contenus multimédia, dit fichier de description multimédia, ladite requête étant envoyée par au moins un terminal utilisateur de ladite pluralité de terminaux utilisateur pour accéder audit au moins un contenu multimédia ;
- obtention dudit au moins un fichier de description multimédia ;
- modification dudit au moins un fichier de description multimédia sur la base d'au moins une information représentative d'une qualité de livraison dudit au moins un contenu multimédia vers l'au moins un terminal utilisateur, dite information de qualité de livraison, ladite modification délivrant au moins un fichier de description multimédia modifié ; et
- transmission dudit au moins un fichier de description multimédia modifié audit au moins un terminal utilisateur en réponse à ladite au moins une requête.

Ainsi, l'invention propose une solution nouvelle et inventive pour améliorer l'expérience utilisateur en optimisant le débit de contenu multimédia accessibles par les terminaux utilisateur connectés à une cellule de réseau de radiocommunication, évitant, réduisant, ou résorbant par là-même une congestion de la cellule de réseau.

Pour ce faire, l'invention propose une méthode dans laquelle toutes les requêtes pour des fichiers de description multimédia, ou fichiers manifestes, correspondant à des contenus multimédia recherchés, envoyées par les terminaux utilisateur de la cellule de réseau, ainsi que tous les fichiers manifestes fournis en retour par les serveurs du fournisseur de contenu, transitent par un dispositif d'optimisation du débit. Le dispositif d'optimisation centralisant ainsi les données est alors apte à modifier le contenu de ces fichiers manifestes de manière à interdire l'obtention, par les terminaux utilisateur correspondants, de segments de contenus multimédia associés à une qualité présentant un débit binaire jugé trop important en regard d'une information représentative d'une qualité de livraison.

De la sorte, le dispositif d'optimisation permet d'éviter, de réduire ou de résorber les congestions en optimisant le débit dans la cellule.

Selon un mode de réalisation, l'étape d'obtention comprend les sous-étapes suivantes :

- transmission de ladite au moins une requête à au moins un serveur de gestion dudit au moins un fournisseur de contenus ;
- réception dudit au moins un fichier de description multimédia, ledit fichier de description multimédia étant transmis par ledit au moins un serveur de gestion dudit au moins un fournisseur de contenus.

Ainsi, le dispositif d'optimisation ne gère pas directement les fichiers de description multimédia mais transfère la requête auprès d'un serveur du fournisseur de contenus multimédia. Ainsi les fichiers de description multimédia comprennent des données a priori les plus à jour.

Dans différents modes de réalisation, l'information de qualité de livraison appartient au groupe comprenant :

- une bande passante $Q_a$ de ladite cellule de réseau de radiocommunications ;
- un nombre de terminaux utilisateur requérant simultanément un fichier de description multimédia pour accéder à un contenu multimédia dans ladite cellule de réseau de radiocommunications ;
- un profil utilisateur associé à un terminal connecté à ladite cellule de réseau de radiocommunications ;
- une caractéristique d'un terminal connecté à ladite cellule de réseau de radiocommunications.

Ainsi, le dispositif d'optimisation est apte à obtenir des informations en temps réel sur les conditions opérationnelles dans la cellule de réseau à laquelle sont connectés les terminaux utilisateur en question, de manière à optimiser les débits associés à chaque segment de contenu demandé pour éviter, réduire ou résorber les congestions.

Le dispositif d'optimisation est également apte à obtenir des informations sur les profils utilisateurs et/ou sur les terminaux utilisateur correspondant (par exemple la taille et la résolution des écrans des terminaux pour un contenu vidéo), de manière à en tenir compte pour l'optimisation des débits des segments accessibles.

Dans un autre mode de réalisation de l'invention, le profil utilisateur correspond à un profil client d'un opérateur dudit réseau de radiocommunications ou à un profil client dudit au moins un fournisseur de contenus.

Ainsi, l'optimisation des débits des segments accessibles peut prendre en compte le profil des utilisateurs en tant que client de l'opérateur du réseau de radiocommunication. Par exemple, des arbitrages entre utilisateurs peuvent être effectués en fonction de leurs abonnements auprès de l'opérateur du réseau (abonnement avec une consommation de données illimitée ou non, ...).

L'optimisation des débits des segments accessibles peut également prendre en compte le profil des utilisateurs en tant que client du fournisseur de contenu multimédia. Par exemple, un client ayant un abonnement « premium » peut se voir favorisé et les fichiers manifestes à destination de son terminal utilisateur peuvent ne pas être modifiés.

Dans différents modes de réalisation, la bande passante $Q_a$ appartient au groupe comprenant :

- la bande passante totale disponible pour le transfert de données dans la cellule de réseau en question ;
- une bande passante prédéterminée.

Ainsi, l'optimisation du débit des contenus multimédia accessibles peut se faire sur la base de tout ou partie de la capacité effective de la cellule, renforçant par là-même le caractère adaptatif de la méthode décrite.

Dans d'autres modes de réalisation, l'étape de modification dudit au moins un fichier de description multimédia est mise en oeuvre sur la base d'un indicateur de congestion dans ladite cellule de réseau de radiocommunications appartenant au groupe comprenant :

- un indicateur d'une congestion en cours ;
- un indicateur d'une congestion prévue ;
- une donnée statistique représentative dudit réseau de radiocommunication.

Ainsi, l'optimisation des débits des segments accessibles selon la technique décrite n'est mise en oeuvre que si la cellule de réseau est dans une situation qui peut s'apparenter à une congestion, ou si une telle congestion est envisagée ou prévisible (par exemple un événement sportif ou un concert dont la diffusion est prévue à une heure donnée et qui pourrait entrainer une augmentation de demandes pour un contenu multimédia).

La technique décrite n'est ainsi mise en oeuvre que si nécessaire, i.e. dans une situation de congestion, afin de minimiser son impact lorsque son application ne semble pas utile.

Dans un autre mode de réalisation de l'invention, l'étape de modification dudit au moins un fichier de description multimédia comprend une sous-étape de suppression, pour au moins un segment dudit au moins un contenu multimédia, d'au moins une qualité disponible correspondant à un débit supérieur à un débit moyen $Q_{av}$ préalablement obtenu, ladite sous-étape de suppression étant mise en oeuvre lorsqu'un débit maximal $Q_i^{max}$ supporté par ledit au moins un terminal utilisateur est supérieur audit débit moyen $Q_{av}$.

Ainsi, selon ce mode de réalisation, l'optimisation du débit est obtenue par la suppression d'un ou plusieurs choix de qualité disponibles dans le fichier manifeste, lorsque ce ou ces choix de qualité correspondent à des débits supérieurs à un débit moyen que l'on souhaite garantir à chaque terminal utilisateur connecté dans la cellule du réseau.

De cette manière, un partage équitable entre les terminaux utilisateur des ressources radiofréquences disponibles dans la cellule du réseau est effectué, le débit moyen que l'on souhaite garantir à chacun étant identique.

Selon une caractéristique particulière, le profil des utilisateurs en tant que clients du fournisseur de contenus multimédia peut-être pris en considération pour la mise en oeuvre de cette sous-étape de suppression. Par exemple, un client dit « premium » peut être favorisé et dans ce cas, soit la suppression n'est pas effectuée dans un fichier manifeste requis par un utilisateur « premium », soit la suppression est mise en oeuvre différemment (par exemple seulement certaines des qualités qui auraient été supprimées pour un utilisateur non « premium » le sont pour un utilisateur « premium »).

Dans un autre mode de réalisation de l'invention, ladite au moins une qualité disponible supprimée correspond à un débit supérieur audit débit moyen $Q_{av}$ auquel est ajoutée une marge $Q_{diff}$, ladite marge $Q_{diff}$ étant décrémentée lors d'une mise en oeuvre ultérieure de ladite étape de suppression.

Ainsi, ce mode de réalisation de l'invention prévoit qu'un état représentatif d'une congestion ou d'une absence de congestion associé à la cellule soit maintenu par le dispositif d'optimisation, de façon à optimiser le débit de manière progressive.

De cette manière, les qualités disponibles supprimées dans les fichiers manifestes sont peu nombreuses au début d'une congestion détectée de la cellule de réseau, et deviennent plus nombreuses au fur et à mesure des requêtes successives des terminaux utilisateur pour un contenu multimédia, si la situation de congestion perdure. Ainsi, une transition douce depuis une situation non régulée des débits disponibles pour ces contenus, correspondant à un état non congestionné de la cellule, jusqu'à une situation de régulation complète, lorsqu'une congestion perdure, peut être obtenue.

Dans un autre mode de réalisation de l'invention, l'étape de modification dudit au moins un fichier de description multimédia comprend les sous-étapes suivantes, préalablement à ladite étape de suppression :

- obtention d'une information représentative dudit débit maximal $Q_i^{max}$ supporté par ledit au moins un terminal utilisateur et d'une information représentative de la bande passante $Q_a$ de ladite cellule de réseau de radiocommunications ;
- calcul dudit débit moyen $Q_{av}=Q_a/N$, N représentant le nombre de terminaux utilisateur connectés à ladite cellule de réseau de radiocommunications requérant au moins un desdits contenus multimédia.

Ainsi, l'optimisation du débit, obtenue par le partage des ressources radiofréquences, se fait de manière équitable et optimisée entre les terminaux utilisateur, le débit moyen que l'on souhaite garantir à chacun étant identique et la somme de ces débits correspondant à la bande passante de la cellule de réseau de radiocommunications (par exemple la bande passante allouée à l'accès aux contenus multimédia dans la cellule de réseau de radiocommunications en question, ou la bande passante totale disponible pour le transfert de données dans la cellule de réseau en question, ....).

Dans un autre mode de réalisation de l'invention, ledit au moins un fichier de description multimédia étant un fichier au standard MPD (pour « Media Présentation Description » en anglais) et ledit au moins un terminal utilisateur mettant en oeuvre un client selon le standard DASH (pour « Dynamic Adaptive Streaming over HTTP » en anglais, avec HTTP correspondant à « HyperText Transfer Protocol »).

Ainsi, le format du fichier manifeste donne accès à une qualité associée à un débit pour chaque segment de contenu multimédia listé, permettant ainsi au dispositif d'optimisation de supprimer certaines entrées (donc certaines qualités a priori disponibles) sur la base d'une information représentative d'une qualité de livraison et ainsi d'optimiser le débit des contenus multimédia accessibles par les terminaux utilisateur connectés à la cellule de réseau.

Dans un autre mode de réalisation de l'invention, le dispositif d'optimisation du débit étant localisé dans un serveur au standard MEC (pour « Mobile Edge Computing » en anglais).

Ainsi, le dispositif d'optimisation du débit bénéficie d'un accès direct à toutes les conditions opérationnelles de la cellule de réseau de radiocommunications afin d'optimiser le débit des contenus multimédia accessibles par les terminaux utilisateur connectés à la cellule de réseau.

Dans un autre mode de réalisation de l'invention, le dispositif d'optimisation du débit étant localisé dans un serveur dudit au moins un fournisseur de contenus multimédia.

Ainsi, le fournisseur de contenus multimédia peut avoir un contrôle direct et aisé de la modification des fichiers MPD devant être renvoyés vers les terminaux utilisateurs.

L'invention concerne également un programme d'ordinateur comprenant des instructions de code de programme pour la mise en oeuvre d'un procédé d'optimisation du débit de contenus multimédia accessibles par au moins un terminal utilisateur connecté à une cellule de réseau de radiocommunication tel que décrit précédemment, selon l'un quelconque de ses différents modes de réalisation, lorsque ledit programme est exécuté par un processeur.

Dans un autre mode de réalisation de l'invention, il est proposé un dispositif d'optimisation du débit de contenus multimédia accessibles par une pluralité de terminaux utilisateur connectés à une cellule de réseau de radiocommunication, lesdits contenus multimédia étant stockés sous la forme d'une pluralité de segments indépendants sur au moins un serveur de contenus multimédia associé à au moins un fournisseur de contenus. Un tel dispositif d'optimisation du débit comprend une machine de calcul reprogrammable ou une machine de calcul dédiée, apte à et configurée pour :

- recevoir au moins une requête pour obtenir au moins un fichier représentatif d'au moins une qualité disponible correspondant à un débit pour au moins un segment d'au moins un desdits contenus multimédia, dit fichier de description multimédia, ladite requête étant envoyée par au moins un terminal utilisateur de ladite pluralité de terminaux utilisateur pour accéder audit au moins un contenu multimédia ;
- obtenir ledit au moins un fichier de description multimédia ;
- modifier ledit au moins un fichier de description multimédia sur la base d'au moins une information représentative d'une qualité de livraison dudit au moins un contenu multimédia vers l'au moins un terminal utilisateur, dite information de qualité de livraison, ladite modification délivrant au moins un fichier de description multimédia modifié ; et
- transmettre ledit au moins un fichier de description multimédia modifié audit au moins un terminal utilisateur en réponse à ladite au moins une requête.

Ainsi, selon encore un autre aspect, l'invention concerne également un dispositif d'optimisation du débit de contenus multimédia accessibles par une pluralité de terminaux utilisateur connectés à une cellule de réseau de radiocommunication, qui est notamment apte à mettre en oeuvre le procédé d'optimisation du débit de contenus multimédia accessibles par une pluralité de terminaux utilisateur connectés à une cellule de réseau de radiocommunication selon l'invention (selon l'un quelconque des différents modes de réalisation précités).

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- les figures 1a et 1b représentent une configuration d'un réseau de radiocommunications du type cellulaire et les interactions entre entités d'un tel réseau lors de l'accès d'un terminal utilisateur à un contenu multimédia déporté, selon une configuration de l'art antérieur ;
- les figures 2a, 2b et 2c illustrent une configuration d'un réseau de radiocommunications du type cellulaire et les interactions entre entités d'un tel réseau lors de l'accès d'un terminal utilisateur à un contenu multimédia déporté, selon différents modes de réalisation de l'invention ;
- la figure 3 illustre les étapes d'une méthode d'optimisation du débit de contenus multimédia accessibles par des terminaux utilisateur selon un mode de réalisation de l'invention ;
- la figure 4 illustre un exemple de structure de dispositif d'optimisation du débit de contenus multimédia accessibles par un terminal utilisateur selon différents modes de réalisation de l'invention.

## 5 DESCRIPTION DETAILLEE DE L'INVENTION

Sur toutes les figures du présent document, les éléments et étapes identiques sont désignés par une même référence.

Le principe général de la technique décrite consiste à proposer une méthode d'optimisation du débit de contenus multimédia accessibles par une pluralité de terminaux utilisateur connectés à une cellule de réseau de radiocommunication basée sur la modification « à la volée » de fichiers listant différentes qualités disponibles, correspondant à différents débits, pour des segments de contenus multimédia auxquels souhaitent accéder les terminaux utilisateur.

Pour ce faire, un dispositif d'optimisation du débit reçoit une requête envoyée par un terminal utilisateur pour un fichier de description multimédia, ou fichier manifeste, correspondant à un contenu multimédia recherché. Le dispositif d'optimisation du débit obtient alors le fichier manifeste requis, ce fichier listant les segments disponibles du contenu multimédia demandé ainsi que la qualité associée (et donc le débit binaire correspondant). Le dispositif d'optimisation du débit modifie alors le fichier manifeste sur la base d'une information représentative d'une qualité de livraison, tenant compte de critères supplémentaires distincts du seul besoin du terminal utilisateur, avant de le transmettre au terminal utilisateur ayant transmis la requête.

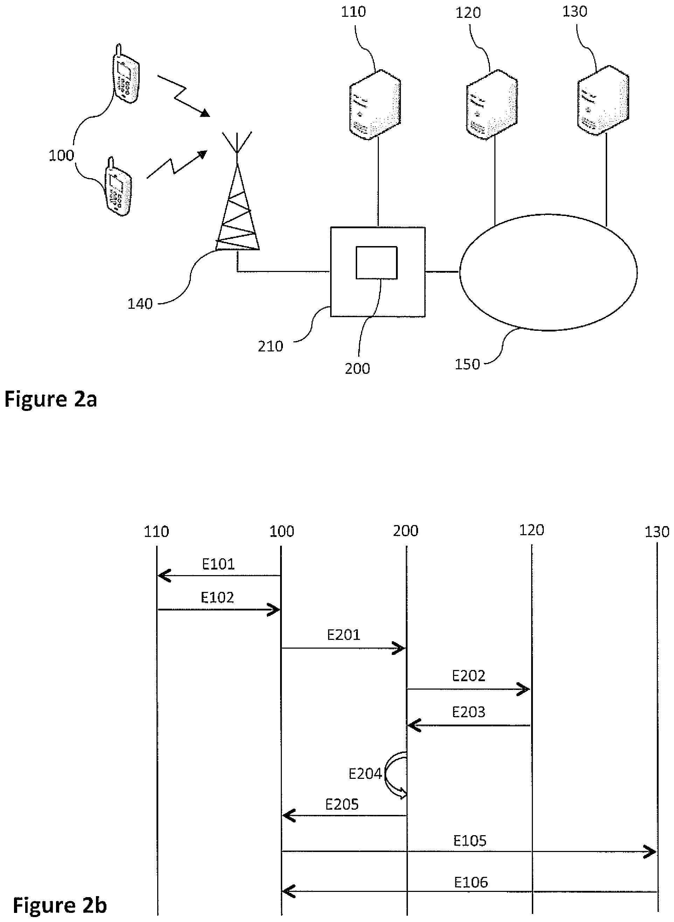

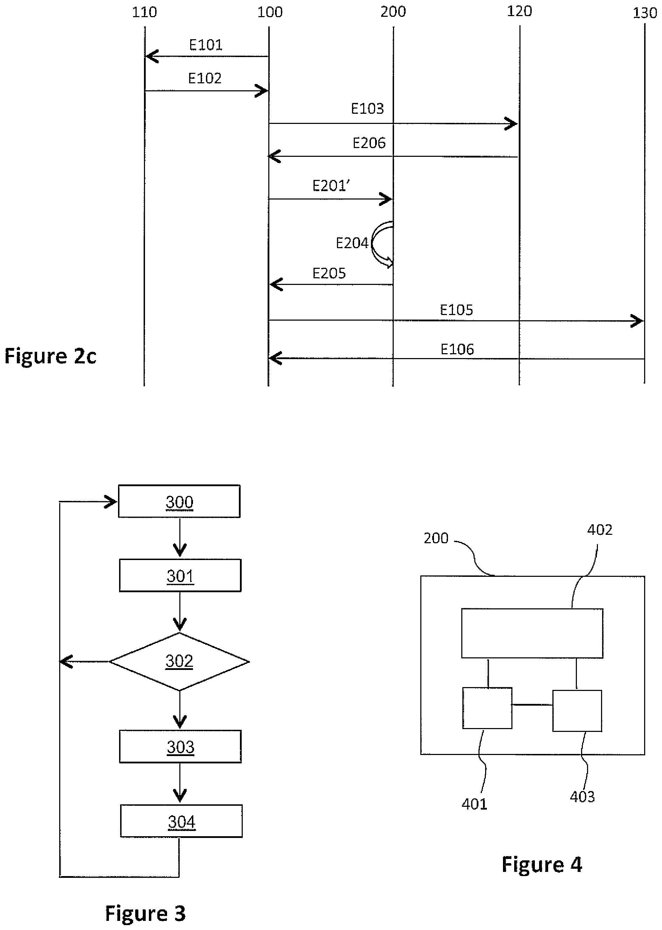

On décrit maintenant, en relation avec les **figures 2a, 2b et 2c,** les interactions entre entités d'un réseau de radiocommunications du type cellulaire lors de l'accès d'un terminal utilisateur à un contenu multimédia déporté, selon différents modes de réalisation de l'invention, ainsi que la configuration réseau correspondante (figure **2a**).

Plus précisément, dans cette configuration, le réseau de radiocommunications comprend un serveur MEC 210 localisé entre le coeur de réseau 150 et le noeud d'accès 140 de la partie réseau mobile (par exemple une station de base d'un réseau cellulaire du type 2G, 3G, 4G, etc). Un dispositif d'optimisation du débit 200 mettant en oeuvre la technique décrite est alors inclus dans le serveur MEC 210.

Selon le mode de réalisation illustré sur la figure 2b, lors d'une étape E201, une requête utilisateur pour un fichier manifeste de type MPD, correspondant à un contenu multimédia recherché, transmise par un terminal utilisateur 100 mettant en oeuvre un client DASH, est reçue par le dispositif d'optimisation du débit 200 localisé dans le serveur MEC 210 du réseau de radiocommunications cellulaire auquel est connecté le terminal utilisateur 100. Selon ce mode de réalisation de l'invention, la requête n'est pas transmise directement au serveur de gestion 120 du fournisseur de contenu multimédia, comme dans la technique connue décrite en relation avec la figure 1.

Selon ce mode de réalisation, le dispositif d'optimisation du débit 200 se comporte donc comme un serveur mandataire (ou « proxy » en anglais) vis-à-vis des terminaux utilisateur cherchant à obtenir un contenu multimédia auprès du fournisseur de contenus multimédia auprès duquel ils se sont identifiés (ou enregistrés) lors des étapes E101 et E102, et dont les serveurs sont connectés au réseau de radiocommunications en question.

Afin que le serveur de gestion 120 du fournisseur de contenu multimédia puisse fournir le fichier manifeste requis, le dispositif d'optimisation du débit 200 lui transmet la requête, lors d'une étape E202.

Lors d'une étape E203, le dispositif d'optimisation du débit 200 reçoit en réponse un fichier manifeste MPD comprenant une liste des segments disponibles sur les serveurs de contenus multimédia 130 du fournisseur de contenu multimédia pour le contenu multimédia recherché, ainsi que la qualité associée (et le débit binaire correspondant).

Lors d'une étape E204, le dispositif d'optimisation modifie le contenu du fichier MPD sur la base d'une information représentative d'une qualité de livraison, dans le but d'optimiser le débit des segments du contenu multimédia accessibles par le terminal utilisateur.

Dans des variantes, l'information représentative d'une qualité de livraison correspond à :

- une bande passante $Q_a$ de la cellule de réseau de radiocommunications à laquelle est connecté le terminal utilisateur 100 ;
- un nombre de terminaux utilisateur requérant simultanément un fichier de description multimédia dans la cellule de réseau de radiocommunications ;
- un profil utilisateur associé au terminal utilisateur 100 et/ou à un autre terminal utilisateur connecté à la même cellule ;
- une caractéristique du terminal utilisateur 100 et/ou à un autre terminal utilisateur connecté à la même cellule.

Ainsi, le dispositif d'optimisation du débit 200, localisé dans un serveur se situant entre le coeur de réseau 150 et le noeud d'accès 140 de la partie réseau mobile tire parti de sa proximité avec le noeud d'accès 140 pour obtenir, ou accéder à des informations en temps réel sur les conditions opérationnelles dans la cellule de réseau en question, par exemple la bande passante $Q_a$ (cette bande passante pouvant par exemple être ajustée en fonction des conditions de propagation des signaux radioélectriques dans la cellule, ou de la charge effective de la cellule), ou le nombre de terminaux utilisateur requérant simultanément un fichier de description multimédia dans la cellule de réseau de radiocommunications en question.

Dans des variantes, la bande passante $Q_a$ correspond à :

- la bande passante totale disponible pour le transfert de données dans la cellule de réseau en question ;
- une bande passante prédéterminée, par exemple une fraction de la capacité totale de cellule qui est allouée au transfert de données ou à l'accès aux contenus multimédia.

Ainsi, l'optimisation du débit des contenus multimédia accessibles peut se faire sur la base de tout ou partie de la capacité effective de la cellule, renforçant par là-même le caractère adaptatif de la méthode décrite.

Ce type de fonctionnalité permettant la remontée en temps réel ou périodique des conditions opérationnelles d'une cellule réseau à des applications localisées dans un serveur à proximité de la cellule en question est par exemple prévu dans l'approche MEC en cours de standardisation.

Dans une variante, le dispositif d'optimisation du débit 200 est géré par l'opérateur du réseau de radiocommunications en question, lui permettant ainsi d'adresser et de résoudre les congestions pouvant survenir dans les cellules de son propre réseau.

Dans une autre variante, le dispositif d'optimisation du débit 200 est géré par des tierces parties, par exemple le fournisseur de contenu multimédia, permettant ainsi à ce dernier d'avoir plus de souplesse dans la gestion des services proposés à ses clients. Par ailleurs, cette approche permet au fournisseur de contenus de maximiser le nombre de clients satisfaits, ainsi que d'offrir la possibilité de servir plus de clients.

Dans un autre mode de réalisation, le dispositif d'optimisation du débit 200 est localisé dans un serveur du fournisseur de contenus multimédia, par exemple dans le serveur de gestion 120, permettant par là-même au fournisseur de contenus d'avoir un contrôle direct et aisé de la modification des fichiers MPD devant être renvoyés vers les terminaux utilisateurs. Dans ce cas, les conditions opérationnelles de la cellule réseau en question sont remontées au serveur du fournisseur de contenus multimédia par le serveur se situant entre le coeur de réseau 150 et le noeud d'accès 140 de la partie réseau mobile, par exemple un serveur MEC.

Par ailleurs, selon le mode de réalisation illustré sur la figure 2b, le dispositif d'optimisation du débit 200 joue le rôle de serveur mandataire vis-à-vis des terminaux utilisateur cherchant à obtenir un contenu multimédia auprès du fournisseur de contenus multimédia auprès duquel ils se sont identifiés (ou enregistrés) lors de l'étape 101. Ce dispositif a donc la connaissance de toutes les requêtes émises par tous les terminaux utilisateur localisés dans la cellule de réseau en question.

Sur la base de la connaissance de ces requêtes et des conditions opérationnelles de la cellule de réseau mises à jour périodiquement, le dispositif d'optimisation du débit 200 est apte à modifier chaque fichier manifeste MPD correspondant à une requête reçue lors de l'étape E201 de manière à éviter, réduire ou résorber les engorgements.

En particulier, le dispositif d'optimisation du débit 200 peut supprimer les entrées de fichiers dont il estime que les qualités associées correspondent à des débits binaires trop élevés en regard du nombre de requêtes reçues et du débit binaire qu'il convient alors de garantir à chaque utilisateur. Ainsi, le client DASH installé sur chaque terminal utilisateur 100 ayant envoyé une requête ne pourra pas sélectionner une qualité de segment correspondant à un débit binaire trop important, un tel débit binaire trop important pouvant pénaliser les autres utilisateurs et conduire à une congestion de la cellule du réseau.

Dans des variantes, le dispositif d'optimisation du débit 200 tient également compte du profil des utilisateurs.

Il peut s'agir par exemple du profil des utilisateurs en tant que clients du fournisseur de contenus multimédia. Un client dit « premium » peut en effet se voir favorisé et les fichiers manifestes MPD à destination de son terminal utilisateur 100 peuvent être modifiés différemment, ou même ne pas être modifiés. Dans ce cas, les profils utilisateurs stockés dans un serveur du fournisseur de contenus multimédia, par exemple dans le serveur d'identification 110 ou dans le serveur de gestion 120, sont fournis au dispositif d'optimisation du débit 200. Ces profils dupliqués sur le dispositif d'optimisation du débit 200 peuvent alors être mis à jour périodiquement, de manière automatique ou à la demande.

Il peut s'agir également du profil des utilisateurs en tant que clients de l'opérateur du réseau de radiocommunications. Là aussi, des arbitrages peuvent être effectués sur les débits accessibles en fonction des abonnements des utilisateurs du réseau (par exemple si l'abonnement est orienté « données » ou simplement « communication vocale »). Dans ce cas, les profils des clients du réseau de radiocommunications qui sont stockés dans un serveur du coeur de réseau, par exemple un serveur AAA (pour « Authentification, Authorization and Accounting » en anglais), un serveur HSS (pour « Home Subscriber Server » en anglais), ou bien encore un serveur PCRF (pour « Policy and Charging Rules Function » en anglais), et sont fournis au dispositif d'optimisation du débit 200. Ces profils clients dupliqués sur le dispositif d'optimisation du débit 200 par l'opérateur du réseau de radiocommunications peuvent alors également être mis à jour périodiquement, de manière automatique ou à la demande.

Dans d'autres variantes, le dispositif d'optimisation du débit 200 tient également compte des caractéristiques du terminal utilisateur 100.

Par exemple, lorsque le contenu multimédia demandé est un contenu vidéo, la taille et la résolution de l'écran du terminal sont prises en considération pour décider quels sont les segments qui seront accessibles au terminal (plus l'écran est grand, plus la qualité, et le débit correspondant, des segments autorisés est importante).

Lors d'une étape E205, le dispositif d'optimisation du débit 200 transmet le fichier manifeste MPD modifié au terminal utilisateur 100 ayant transmis la requête correspondante lors de l'étape E201.

Dans des variantes, le terminal utilisateur 100 mettant en oeuvre un client DASH envoie périodiquement une requête pour un fichier manifeste MPD correspondant au contenu multimédia recherché, par exemple toutes les trente secondes. En effet, la présence des segments du contenu multimédia demandé peut évoluer rapidement sur les serveurs de contenus multimédia 130 et une mise à jour régulière du fichier manifeste MPD peut s'avérer nécessaire. Par ailleurs, ayant obtenu un segment donné, le terminal utilisateur 100 peut envoyer une requête pour un autre segment. Dans ce cas, les étapes décrites ci-dessus sont réitérées à chaque nouvelle requête.

Dans une variante, le mécanisme d'envoi périodique de requêtes est déclenché via un champ dédié présent dans les fichiers manifeste MPD, ce champ indiquant la durée de validité des données présentes dans le fichier, permettant donc d'obtenir la date à laquelle un nouveau fichier manifeste doit être requis.

Dans une autre variante, un champ équivalent est directement inséré dans les segments obtenus par le terminal utilisateur 100, lui indiquant par là-même quand il doit requérir un nouveau fichier manifeste dans le but d'obtenir le segment suivant.

Selon le mode de réalisation illustré sur la figure 2c, lors de l'étape E103, la requête utilisateur pour un fichier manifeste correspondant à un contenu multimédia recherché est envoyée directement au serveur de gestion 120 du fournisseur de contenus multimédia, comme dans la technique connue décrite en relation avec la figure 1a.

Cependant, dans ce mode de réalisation, lors d'une étape E206, le serveur de gestion 120 renvoie au terminal utilisateur 100 une instruction lui demandant de rediriger sa requête à destination du dispositif d'optimisation du débit 200.

Ainsi, lors d'une étape E201', la requête est cette fois reçue par le dispositif d'optimisation du débit 200.

Selon ce mode de réalisation, toutes les requêtes pour obtenir un fichier manifeste MPD, que les terminaux utilisateur adressent aux serveurs du fournisseur de contenu multimédia auprès duquel ils se sont identifiés (ou enregistrés) lors de l'étape 101, sont systématiquement redirigées vers le dispositif d'optimisation du débit 200. De la sorte, le dispositif d'optimisation du débit 200 est apte à exécuter ensuite les mêmes étapes E204 et E205 que celles du mode de réalisation décrit en relation avec la figure 2a.

Selon une alternative, le dispositif d'optimisation du débit 200 exécute également les étapes E202 et E203 afin d'obtenir, auprès du serveur de gestion 120 du fournisseur de contenu multimédia, un fichier manifeste MPD correspondant à la requête reçue lors d'une étape E201'. Dans ce cas, le dispositif d'optimisation du débit 200 ne gère pas directement les fichiers manifestes MPD mais transfère la requête auprès d'un serveur du fournisseur de contenus multimédia, de manière à récupérer des fichiers manifestes MPD comprenant des données a priori les plus à jour.

Selon une autre alternative, les fichiers MPD sont directement stockés dans le dispositif d'optimisation du débit 200, par exemple suite à une installation préalable par un serveur du fournisseur de contenus multimédia. Ainsi, le dispositif d'optimisation du débit 200 n'a pas besoin de transmettre la requête au serveur de gestion 120 afin d'obtenir en retour le fichier MPD.

Dans encore une autre alternative, le dispositif d'optimisation du débit 200 est apte à construire le fichier MPD sur la base d'informations que ce dernier a à sa disposition sur les contenus multimédia accessibles. Ces informations sont dans ce cas fournies, préalablement ou à la demande, par le fournisseur de contenus multimédia en question.

On décrit maintenant, en relation avec la **figure 3,** les étapes d'un procédé d'optimisation du débit de contenus multimédia accessibles par des terminaux utilisateur, selon un mode de réalisation de l'invention.

Dans ce mode de réalisation, N terminaux utilisateur 100 sont connectés à la cellule de réseau correspondant au noeud d'accès 140 et requièrent simultanément un contenu multimédia auprès d'un fournisseur de contenu.

Lors d'une étape 300, le dispositif d'optimisation du débit 200 obtient N informations de débit maximal $Q_i^{max}$, avec i un entier allant de 1 à N, le débit maximal $Q_i^{max}$ correspondant au débit maximal supporté par le i-ème terminal utilisateur 100.

Dans une variante, cette information est obtenue via le profil des utilisateurs des terminaux 100 en tant que clients de l'opérateur du réseau de radiocommunications, ce profil contenant les caractéristiques des terminaux utilisateur 100 utilisés. Comme décrit en relation avec la figure 2b, les profils des clients du réseau de radiocommunications sont par exemple stockés dans un serveur du coeur de réseau du type AAA ou HSS, et sont dupliqués sur le dispositif d'optimisation du débit 200 par l'opérateur du réseau de radiocommunications. Les profils peuvent alors également être mis à jour périodiquement, de manière automatique ou à la demande.

Dans une autre variante, cette information est obtenue via le profil des utilisateurs des terminaux 100 en tant que clients du fournisseur de contenu multimédia, ce profil contenant des informations de préférence en tant qu'utilisateurs de contenu multimédia, notamment le type d'appareil utilisé et ses caractéristiques. Là encore les profils des clients sont stockés dans un serveur du fournisseur de contenu multimédia, par exemple dans le serveur d'identification 110 ou dans le serveur de gestion 120, et sont dupliqués sur le dispositif d'optimisation du débit 200 par le fournisseur de contenu. Ils peuvent alors être mis à jour périodiquement, de manière automatique ou à la demande.

Lors d'une étape 301, le dispositif d'optimisation du débit 200 obtient une information représentative de la bande passante $Q_a$ de la cellule de réseau à laquelle sont connectés les N terminaux utilisateur 100. Dans ce mode de réalisation, la bande passante $Q_a$ correspond à une bande passante allouée à l'accès aux contenus multimédia. Comme déjà décrit, dans d'autres modes de réalisation, la bande passante $Q_a$ peut correspondre à :

- la bande passante totale disponible pour le transfert de données dans la cellule de réseau en question ;
- une bande passante prédéterminée, par exemple une fraction de la capacité totale de cellule qui est allouée au transfert de données.

Lors d'une étape 302, le dispositif d'optimisation du débit 200 détermine, sur la base d'un indicateur de congestion, si la cellule de réseau est dans une situation qui peut s'apparenter à une congestion. Dans des variantes, l'indicateur de congestion appartient au groupe comprenant :

- un indicateur d'une congestion en cours ;
- un indicateur d'une congestion prévue, par exemple si un évènement particulier est prévu à une heure donnée (événement sportif, concert, ...) qui pourrait entrainer une augmentation de demandes pour un contenu multimédia ;
- une donnée statistique représentative du réseau de radiocommunication, par exemple l'évolution dans le temps du nombre de terminaux utilisateurs connectés à la cellule de réseau, pouvant présupposer une congestion à venir.

Dans une variante, le dispositif d'optimisation du débit 200 détermine si la bande passante effectivement utilisée pour l'accès aux contenus multimédia dans la cellule est supérieure à un seuil proportionnel à la bande passante $Q_a$ de la cellule de réseau à laquelle sont connectés les N terminaux utilisateur 100 et qui est allouée à l'accès aux contenus multimédia. Ce seuil peut par exemple correspondre à 80% de la bande passante $Q_a$. Ainsi, les étapes 303 et 304 décrites si dessous et qui mettent en oeuvre la modification effective des fichiers manifestes MPD devant être retournés aux N terminaux utilisateur ne sont effectuées que si la bande passante effectivement utilisée dans la cellule s'approche de la bande passante $Q_a$, i.e. si l'on considère que l'on est dans une situation de congestion, ou que l'on s'en approche. Si ce n'est pas le cas, le dispositif d'optimisation du débit 200 n'effectue aucune modification des fichiers manifestes et reprend l'exécution de la méthode décrite depuis l'étape initiale 300.

Lors d'une étape 303, en cas de congestion, i.e. s'il a été déterminé lors de l'étape 302 que la bande passante effectivement utilisée est supérieure à un seuil, le dispositif d'optimisation du débit 200 calcule un débit moyen $Q_{av} = Q_a/N$. Le débit moyen $Q_{av}$ ainsi obtenu représente le débit que l'on souhaite garantir à chaque terminal utilisateur 100 connecté à la cellule de réseau dans une approche de répartition équitable de ces ressources radio allouées à l'accès à des contenus multimédia.

Lors d'une étape 304, le dispositif d'optimisation du débit 200 modifie chaque fichier manifeste devant être retourné à chaque terminal utilisateur 100 si le débit maximal supporté par ce terminal utilisateur 100 est supérieur au débit moyen $Q_{av}$ obtenu lors de l'étape 303. En particulier, le dispositif d'optimisation du débit 200 modifie le fichier manifeste MPD devant être retourné au i-ème terminal utilisateur 100 si le débit maximal $Q_i^{max}$ supporté par ce terminal utilisateur est supérieur au débit moyen $Q_{av}$ obtenu lors de l'étape 303.

Dans une variante, le dispositif d'optimisation du débit 200 supprime les entrées correspondant aux segments du contenu multimédia demandé qui présentent une qualité correspondant à un débit binaire supérieur au débit moyen $Q_{av}$. Ainsi, dans cette variante, les clients DASH embarqués dans les N terminaux utilisateur 100 qui pourraient supporter des débits supérieurs au débit moyen $Q_{av}$ ne se voient présenter que des choix de segments de contenu multimédia correspondant à des débits inférieurs à ce débit moyen $Q_{av}$. Aucun de ces clients ne pourra alors faire un choix de segment conduisant à une congestion de la cellule. Les clients auront ainsi une meilleure qualité d'expérience grâce à la minimisation des oscillations de qualité, tout en permettant d'avoir plus d'équité entre utilisateurs.

Dans une autre variante, le dispositif d'optimisation du débit 200 supprime les entrées correspondant aux segments du contenu multimédia demandé qui présentent une qualité correspondant à un débit binaire supérieur au débit moyen $Q_{av}$ auquel est ajoutée une marge $Q_{diff}$. Ainsi, seules les entrées correspondant aux segments qui présentent une qualité correspondant à un débit binaire supérieur à $Q_{av} + Q_{diff}$ sont supprimées. Par ailleurs, la marge $Q_{diff}$ est décrémentée dans le temps, de façon à ce que les suppressions dans le fichier manifeste MPD soient peu nombreuses au début de la mise en oeuvre de la technique décrite, et augmentent au fur et à mesure des itérations du procédé. Ainsi, une transition douce peut être obtenue, depuis une situation non régulée correspondant à un état de non congestion, jusqu'à une situation de régulation complète lorsqu'une congestion est en cours.

L'application de cette marge $Q_{diff}$ peut donc être conditionnée par la connaissance d'un état représentatif d'une congestion ou de l'absence d'une congestion dans la cellule. Par ailleurs, il convient de s'assurer que cette marge $Q_{diff}$ ne peut pas être négative, de façon à ne pas supprimer de qualité correspondant à un débit binaire inférieur au débit moyen $Q_{av}$.

Selon une alternative, la qualité d'un segment est représentée par un indice, par exemple un entier, transformée en un débit binaire correspondant via une fonction de conversion dédiée. Dans ce cas, la marge correspond, par exemple, à un pourcentage de la qualité en question.

On décrit maintenant, en relation avec la **figure 4** un exemple de structure de dispositif d'optimisation du débit 200 selon différents modes de réalisation de l'invention.

Le dispositif d'optimisation du débit 200 comprend une mémoire vive 403 (par exemple une mémoire RAM), une unité de traitement 402 équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

Cette figure 4 illustre seulement une manière particulière, parmi plusieurs possibles, d'implémenter le dispositif d'optimisation du débit 200. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

**Revendications**

1. Procédé d'optimisation du débit de contenus multimédia accessibles par une pluralité de terminaux utilisateur (100) connectés à une cellule de réseau de radiocommunications, lesdits contenus multimédia étant stockés sous la forme d'une pluralité de segments indépendants sur au moins un serveur de contenus multimédia (130) associé à au moins un fournisseur de contenus, **caractérisé en ce que** ledit procédé de gestion du débit comprend les étapes suivantes, mises en oeuvre dans un dispositif d'optimisation du débit (200) :

> • réception (E201, E201') d'au moins une requête pour obtenir au moins un fichier représentatif d'au moins une qualité disponible correspondant à un débit pour au moins un segment d'au moins un desdits contenus multimédia, dit fichier de description multimédia, ladite requête étant envoyée par au moins un terminal utilisateur de ladite pluralité de terminaux utilisateur pour accéder audit au moins un contenu multimédia ;
> • obtention (E202, E203) dudit au moins un fichier de description multimédia ;
> • modification (E204) dudit au moins un fichier de description multimédia sur la base d'au moins une information représentative d'une qualité de livraison dudit au moins un contenu multimédia vers l'au moins un terminal utilisateur, dite information de qualité de livraison,
> ladite modification comprenant une sous-étape de suppression, pour au moins un segment dudit au moins un contenu multimédia, d'au moins une qualité disponible correspondant à un débit supérieur à un débit moyen $Q_{av}$ préalablement obtenu, ladite sous-étape de suppression étant mise en oeuvre lorsqu'un débit maximal $Q_i^{max}$ supporté par ledit au moins un terminal utilisateur est supérieur audit débit moyen $Q_{av}$,
> ladite au moins une qualité disponible supprimée correspondant à un débit supérieur audit débit moyen $Q_{av}$ auquel est ajoutée une marge $Q_{diff}$, ladite marge $Q_{diff}$ étant décrémentée lors d'une mise en oeuvre ultérieure de ladite étape de suppression,
> ladite modification délivrant au moins un fichier de description multimédia modifié ; et
> • transmission (E205) dudit au moins un fichier de description multimédia modifié audit au moins un terminal utilisateur en réponse à ladite au moins une requête.

2. Procédé d'optimisation du débit selon la revendication 1, dans lequel ladite étape d'obtention comprend les sous-étapes suivantes :

> • transmission de ladite au moins une requête à au moins un serveur de gestion dudit au moins un fournisseur de contenus ;

> • réception dudit au moins un fichier de description multimédia, ledit fichier de description multimédia étant transmis par ledit au moins un serveur de gestion dudit au moins un fournisseur de contenus.

3. Procédé d'optimisation du débit selon l'une quelconque des revendications 1 ou 2, dans lequel ladite information de qualité de livraison appartient au groupe comprenant :

> • une bande passante $Q_a$ de ladite cellule de réseau de radiocommunications ;
> • un nombre de terminaux utilisateur requérant simultanément un fichier de description multimédia pour accéder à un contenu multimédia dans ladite cellule de réseau de radiocommunications ;
> • un profil utilisateur associé à un terminal connecté à ladite cellule de réseau de radiocommunications ;
> • une caractéristique d'un terminal connecté à ladite cellule de réseau de radiocommunications.

4. Procédé d'optimisation du débit selon la revendication 3, dans lequel ledit profil utilisateur correspond à un profil client d'un opérateur dudit réseau de radiocommunications ou à un profil client dudit au moins un fournisseur de contenus.

5. Procédé d'optimisation du débit selon l'une quelconque des revendications 3 ou 4, dans lequel ladite bande passante $Q_a$ appartient au groupe comprenant :

> • la bande passante totale disponible pour le transfert de données dans la cellule de réseau en question ;
> • une bande passante prédéterminée.

6. Procédé d'optimisation du débit selon les revendications 1 à 5, dans lequel ladite étape de modification dudit au moins un fichier de description multimédia est mise en oeuvre sur la base d'un indicateur de congestion dans ladite cellule de réseau de radiocommunications appartenant au groupe comprenant :

> • un indicateur d'une congestion en cours ;
> • un indicateur d'une congestion prévue ;
> • une donnée statistique représentative dudit réseau de radiocommunication.

7. Procédé d'optimisation du débit selon l'une quelconque des revendications 1 à 6, dans lequel ladite étape de modification dudit au moins un fichier de description multimédia comprend les sous-étapes suivantes, préalablement à ladite étape de suppression :

• obtention d'une information représentative dudit débit maximal $Q_i^{max}$ supporté par ledit au moins un terminal utilisateur et d'une information représentative de la bande passante $Q_a$ de ladite cellule de réseau de radiocommunications ;
• calcul dudit débit moyen $Q_{av}=Q_a/N$, N représentant le nombre de terminaux utilisateur connectés à ladite cellule de réseau de radiocommunications requérant au moins un desdits contenus multimédia.

8. Procédé d'optimisation du débit selon l'une quelconque des revendications 1 à 7, ledit au moins un fichier de description multimédia étant un fichier au standard MPD (pour « Media Présentation Description » en anglais) et ledit au moins un terminal utilisateur mettant en oeuvre un client selon le standard DASH (pour « Dynamic Adaptive Streaming over HTTP » en anglais, avec HTTP correspondant à « HyperText Transfer Protocol »).

9. Procédé d'optimisation du débit selon l'une quelconque des revendications 1 à 8, ledit dispositif d'optimisation du débit étant localisé dans un serveur au standard MEC (pour « Mobile Edge Computing » en anglais).

10. Procédé d'optimisation du débit selon l'une quelconque des revendications 1 à 8, ledit dispositif d'optimisation du débit étant localisé dans un serveur dudit au moins un fournisseur de contenus multimédia.

11. Produit programme d'ordinateur, comprenant des instructions de code de programme pour la mise en oeuvre d'un procédé selon l'une quelconque des revendications 1 à 10, lorsque ledit programme est exécuté par un processeur.

12. Dispositif d'optimisation du débit de contenus multimédia accessibles par une pluralité de terminaux utilisateur (100) connectés à une cellule de réseau de radiocommunication, lesdits contenus multimédia étant stockés sous la forme d'une pluralité de segments indépendants sur au moins un serveur de contenus multimédia (130) associé à au moins un fournisseur de contenus, **caractérisé en ce que** ledit dispositif d'optimisation du débit comprend une machine de calcul reprogrammable (402) ou une machine de calcul dédiée (402), apte à et configurée pour :

• recevoir au moins une requête pour obtenir au moins un fichier représentatif d'au moins une qualité disponible correspondant à un débit pour au moins un segment d'au moins un desdits contenus multimédia, dit fichier de description multimédia, ladite requête étant envoyée par au moins un terminal utilisateur de ladite pluralité de terminaux utilisateur pour accéder audit au moins un contenu multimédia ;
• obtenir ledit au moins un fichier de description multimédia ;
• modifier ledit au moins un fichier de description multimédia sur la base d'au moins une information représentative d'une qualité de livraison dudit au moins un contenu multimédia vers l'au moins un terminal utilisateur, dite information de qualité de livraison,
ladite modification comprenant une suppression, pour au moins un segment dudit au moins un contenu multimédia, d'au moins une qualité disponible correspondant à un débit supérieur à un débit moyen $Q_{av}$ préalablement obtenu, ladite sous-étape de suppression étant mise en oeuvre lorsqu'un débit maximal $Q_i^{max}$ supporté par ledit au moins un terminal utilisateur est supérieur audit débit moyen $Q_{av}$,
ladite au moins une qualité disponible supprimée correspondant à un débit supérieur audit débit moyen $Q_{av}$ auquel est ajoutée une marge $Q_{diff}$, ladite marge $Q_{diff}$ étant décrémentée lors d'une mise en oeuvre ultérieure de ladite suppression,
ladite modification délivrant au moins un fichier de description multimédia modifié ; et
• transmettre ledit au moins un fichier de description multimédia modifié audit au moins un terminal utilisateur en réponse à ladite au moins une requête.

**Patentansprüche**

1. Verfahren zum Optimieren des Durchsatzes von Multimediainhalten, auf die mehrere Anwenderendgeräte (100), die mit einer Funkkommunikations-Netzzelle verbunden sind, zugreifen können, wobei die Multimediainhalte in Form mehrerer unabhängiger Segmente in wenigstens einem Multimediainhalt-Server (130) gespeichert sind, der wenigstens einem Inhaltsanbieter zugeordnet ist, **dadurch gekennzeichnet, dass** das Durchsatzsteuerverfahren die folgenden Schritte, die in einer Durchsatzoptimierungsvorrichtung (200) ausgeführt werden, umfasst:

• Empfangen (E201, E201') wenigstens einer Anforderung, um wenigstens eine Datei zu erhalten, die wenigstens eine verfügbare Qualität repräsentiert, die einem Durchsatz entspricht, für wenigstens ein Segment wenigstens eines der Multimediainhalte, die Multimediabeschreibungsdatei genannt wird, wobei die Anforderung durch wenigstens ein Anwenderendgerät der mehreren Anwenderendgeräte geschickt wird, um auf wenigstens einen Multimediainhalt zuzugreifen;

• Erhalten (E202, E203) der wenigstens einen Multimediabeschreibungsdatei;

• Modifizieren (E204) der wenigstens einen Multimediabeschreibungsdatei wenigstens anhand von Informationen, die eine Auslieferqualität des wenigstens einen Multimediainhalts zu dem wenigstens einen Anwenderendgerät repräsentieren und Auslieferqualitätsinformationen genannt werden,

wobei das Modifizieren einen Unterschritt des Unterdrückens für wenigstens ein Segment des wenigstens einen Multimediainhalts wenigstens einer verfügbaren Qualität, die einem Durchsatz oberhalb eines mittleren Durchsatzes $Q_{av}$, der vorher erhalten wurde, entspricht, umfasst, wobei der Unterdrückungsunterschritt ausgeführt wird, wenn ein maximaler Durchsatz $Q_i^{\max}$, der von dem wenigstens einen Anwenderendgerät unterstützt, größer als der mittlere Durchsatz $Q_{av}$ ist,

wobei die wenigstens eine unterdrückte verfügbare Qualität einem Durchsatz entspricht, der höher als der mittlere Durchsatz $Q_{av}$ ist, zu dem ein Bereich $Q_{diff}$ hinzugefügt ist, wobei der Bereich $Q_{diff}$ bei einer späteren Ausführung des Unterdrückungsschrittes dekrementiert wird,

wobei das Modifizieren wenigstens eine modifizierte Multimediabeschreibungsdatei ausliefert; und

• Senden (E205) der modifizierten Multimediabeschreibungsdatei an das wenigstens eine Anwenderendgerät in Reaktion auf die wenigstens eine Anforderung.

2. Durchsatzoptimierungsverfahren nach Anspruch 1, wobei der Schritt des Erhaltens die folgenden Unterschritte umfasst:

• Senden der wenigstens einen Anforderung an wenigstens einen Steuerserver des wenigstens einen Inhalteanbieters;

• Empfangen der wenigstens einen Multimediabeschreibungsdatei, wobei die Multimediabeschreibungsdatei durch den wenigstens einen Steuerserver des wenigstens einen Inhalteanbieters gesendet wird.

3. Durchsatzoptimierungsverfahren nach einem der Ansprüche 1 oder 2, wobei die Auslieferungsqualitätsinformationen zu der Gruppe gehören, die Folgendes umfasst:

• ein Durchlassband $Q_a$ der Funkkommunikations-Netzzelle;

• eine Anzahl Anwenderendgeräte, die gleichzeitig eine Multimediabeschreibungsdatei anfordern, um auf einen Multimediainhalt zuzugreifen, in der Funkkommunikations-Netzzelle;

• ein Anwenderprofil, das einem mit der Funkkommunikationsnetzzelle verbundenen Endgerät zugeordnet ist;

• eine Charakteristik eines Endgeräts, das mit der Funkkommunikations-Netzzelle verbunden ist.

4. Durchsatzoptimierungsverfahren nach Anspruch 3, wobei das Anwenderprofil einem Kundenprofil eines Operators des Funkkommunikationsnetzes oder einem Kundenprofil des wenigstens einen Inhalteanbieters entspricht.

5. Durchsatzoptimierungsverfahren nach einem der Ansprüche 3 oder 4, wobei das Durchlassband $Q_a$ zu der Gruppe gehört, die Folgendes umfasst:

• das Durchlassband, das insgesamt für die Übertragung von Daten in der betrachteten Netzzelle verfügbar ist;

• ein vorgegebenes Durchlassband.

6. Durchsatzoptimierungsverfahren nach den Ansprüchen 1 bis 5, wobei der Schritt des Modifizierens der wenigstens einen Multimediabeschreibungsdatei auf der Grundlage eines Anzeigers der Überlastung in der Funkkommunikations-Netzzelle ausgeführt wird, der zu der Gruppe gehört, die Folgendes umfasst:

• einen Anzeiger einer momentanen Überlastung;

• einen Anzeiger einer vorhergesehenen Überlastung;

• statistische Daten, die das Funkkommunikationsnetz repräsentieren.

7. Durchsatzoptimierungsverfahren nach einem der Ansprüche 1 bis 6, wobei der Schritt des Modifizierens der wenigstens einen Multimediabeschreibungsdatei die folgenden Unterschritte umfasst, die vor dem Unterdrückungsschritt ausgeführt werden:

• Erhalten von Informationen, die den maximalen Durchsatz $Q_i^{\max}$, die von dem wenigstens einen Anwenderendgerät unterstützt wird, repräsentieren, und von Informationen, die das

Durchlassband $Q_a$ der Funkkommunikations-Netzzelle repräsentieren;

• Berechnen des mittleren Durchsatzes $Q_{av} = Q_a/N$, wobei N die Anzahl von Anwenderendgeräten, die mit der wenigstens einen Multimediainhalt anfordernden Funkkommunikations-Netzzelle verbunden sind, ist.

8. Durchsatzoptimierungsverfahren nach einem der Ansprüche 1 bis 7, wobei die wenigstens eine Multimediabeschreibungsdatei eine Datei gemäß der MPD-Norm (für "Media Presentation Description" im Englischen) ist und das wenigstens eine Anwenderendgerät einen Client gemäß der DASH-Norm (für "Dynamic Adaptive Streaming over HTTP" im Englischen, wobei HTTP dem "Hypertext Transfer Protocol" entspricht) ausführt.

9. Durchsatzoptimierungsverfahren nach einem der Ansprüche 1 bis 8, wobei sich die Durchsatzoptimierungsvorrichtung in einem Server gemäß der MEC-Norm (für "Mobile Edge Computing" im Englischen) befindet.

10. Durchsatzoptimierungsverfahren nach einem der Ansprüche 1 bis 8, wobei sich die Durchsatzoptimierungsvorrichtung in einem Server eines Multimediainhalteanbieters befindet.

11. Computerprogrammprodukt, das Programmcodebefehle für die Ausführung eines Verfahrens nach einem der Ansprüche 1 bis 10, wenn das Programm durch einen Prozessor abgearbeitet wird, enthält.

12. Vorrichtung für die Optimierung des Durchsatzes von Multimediainhalten, auf die mehrere Anwenderendgeräte (100), die mit einer Funkkommunikations-Netzzelle verbunden sind, zugreifen können, wobei die Multimediainhalte in Form mehrerer unabhängiger Segmente in wenigstens einem Multimediainhalt-Server (130) gespeichert sind, der wenigstens einem Inhalteanbieter zugeordnet ist, **dadurch gekennzeichnet, dass** die Durchsatzoptimierungsvorrichtung eine umprogrammierbare Rechenmaschine (402) oder eine dedizierte Rechenmaschine (402) umfasst, die ausgelegt und konfiguriert ist zum:

• Empfangen wenigstens einer Anforderung, um wenigstens eine Datei zu erhalten, die wenigstens eine verfügbare Qualität repräsentiert, die einem Durchsatz entspricht, für wenigstens ein Segment wenigstens eines der Multimediainhalte, die Multimediabeschreibungsdatei genannt wird, wobei die Anforderung durch wenigstens ein Anwenderendgerät der mehreren Anwenderendgeräte geschickt wird, um auf den wenigstens einen Multimediainhalt zuzugreifen;
• Erhalten wenigstens einer Multimediabeschreibungsdatei;
• Modifizieren der wenigstens einen Multimediabeschreibungsdatei wenigstens anhand von Informationen, die eine Qualität für die Auslieferung des wenigstens einen Multimediainhalts zu dem wenigstens einen Anwenderendgerät repräsentieren und Auslieferungsqualitätsinformation genannt werden,

wobei das Modifizieren ein Unterdrücken für wenigstens ein Segment des wenigstens einen Multimediainhalts wenigstens einer verfügbaren Qualität, die einem Durchsatz entspricht, der höher als ein mittlerer Durchsatz $Q_{av}$, der vorher erhalten worden ist, entspricht, umfasst, wobei der Unterdrückungsunterschritt ausgeführt wird, wenn ein durch das wenigstens eine Anwenderendgerät unterstützter maximaler Durchsatz $Q_i^{\max}$ größer als der mittlere Durchsatz $Q_{av}$ ist,

wobei die wenigstens eine unterdrückte verfügbare Qualität einem Durchsatz entspricht, der höher als der mittlere Durchsatz $Q_{av}$ ist, zu dem ein Bereich $Q_{diff}$ hinzugefügt wird, wobei der Bereich $Q_{diff}$ bei einer späteren Ausführung der Unterdrückung dekrementiert wird,

wobei das Modifizieren wenigstens eine modifizierte Multimediabeschreibungsdatei ausliefert; und

• Senden der wenigstens einen modifizierten Multimediabeschreibungsdatei zu dem wenigstens einen Anwenderendgerät in Reaktion auf die wenigstens eine Anforderung.

**Claims**

1. Method for optimising the bit rate of multimedia contents accessible by a plurality of user terminals (100) connected to a radiocommunications network cell, said multimedia contents being stored in the form of a plurality of independent chunks on at least one multimedia contents server (130) associated with at least one contents provider, **characterised in that** said bit rate management method comprises the following steps, implemented in a bit rate optimising device (200):

• receiving (E201, E201') at least one request to obtain at least one file representing at least one available quality corresponding to a bit rate for at least one chunk of at least one of said multimedia contents, called a multimedia description file, said request being sent by at least one user terminal of said plurality of user terminals to access said at least one multimedia content;
• obtaining (E202, E203) said at least one multimedia description file;
• modifying (E204) said at least one multimedia description file on the basis of at least one piece of information representing a quality of delivery of said at least one multimedia content to the at least one user terminal, called information on quality of delivery, said modification comprising a sub-step of elimination, for at least one chunk of said at least one multimedia content, of at least one available quality corresponding to a bit rate higher than a preliminarily obtained average bit rate $Q_{av}$, said sub-step of elimination being implemented when a maximum bit rate $Q_i^{max}$ borne by said at least one user terminal is higher than said average bit rate $Q_{av}$, said at least one eliminated available quality corresponding to a bit rate higher than said average bit rate $Q_{av}$ to which a margin $Q_{diff}$ is added, this margin $Q_{diff}$ being decremented at a subsequent implementation of said step of elimination, said modification delivering at least one modified multimedia description file; and
• transmitting (E205) said at least one modified multimedia description file to said at least one user terminal in response to said at least one request.

2. Method for optimising the bit rate according to claim 1, wherein said step of obtaining comprises the following substeps:

• transmitting said at least one request to at least one management server of said at least one contents provider; and
• receiving said at least one multimedia description file, said multimedia description file being transmitted by said at least one management server of said at least one contents provider.

3. Method for optimising the bit rate according to either claim 1 or claim 2, wherein said information on quality of delivery belongs to the group consisting of:

• a bandwidth $Q_a$ of said radiocommunications network cell;
• a number of user terminals simultaneously requesting a multimedia description file to access a multimedia content in said radiocommunications network cell;
• a user profile associated with a terminal connected to said radiocommunications network cell;
• a characteristic of a terminal connected to said radiocommunications network cell.

4. Method for optimising the bit rate according to claim 3, wherein said user profile corresponds to a customer profile of an operator of said radiocommunications network or to a customer profile of said at least one contents provider.

5. Method for optimising the bit rate according to either claim 3 or claim 4, wherein the bandwidth $Q_a$ belongs to the group consisting of:

• the total bandwidth available for the transfer of data in the network cell in question;
• a pre-determined bandwidth.

6. Method for optimising the bit rate according to any one of claims 1 to 5, wherein said step of modifying said at least one multimedia description file is implemented on the basis of a congestion indicator in said radiocommunications cell belonging to the group consisting of:

• an indicator of a congestion in progress;
• an indicator of a planned congestion;
• a piece of statistical data representing said radiocommunications network.

7. Method for optimising the bit rate according to any one of claims 1 to 6, wherein said step of modifying said at least one multimedia description file comprises the following substeps, prior to said step of elimination:

• obtaining a piece of information representing said maximum bit rate $Q_i^{max}$ borne by said at least one user terminal and a piece of information representing the bandwidth $Q_a$ of said radiocommunications network cell;
• computing said average bit rate $Q_{av}=Q_a/N$, N representing the number of user terminals connected to said radiocommunications network cell requesting at least one of said multimedia contents.

8. Method for optimising the bit rate according to any one of claims 1 to 7, said at least one multimedia description file being a file according to the MPD (for "Media Presentation Description") standard, and said at least one user terminal implementing a client according to the DASH (for "Dynamic Adaptive Streaming over HTTP standard", with HTTP corresponding to "HyperText Transfer Protocol").

9. Method for optimising the bit rate according to any one of claims 1 to 8, said device for optimising the bit rate being located in a server according to the MEC (for "Mobile Edge Computing") standard.

10. Method for optimising the bit rate according to any one of claims 1 to 8, said device for optimising the bit rate being located in a server of said at least one multimedia contents provider.

11. Computer program product comprising program code instructions to implement a method according to any one of claims 1 to 10, when said program is executed by a processor.

12. Device for optimising the bit rate of multimedia contents accessible by a plurality of user terminals (100) connected to a radiocommunications network cell, said multimedia contents being stored in the form of a plurality of independent chunks on at least one multimedia contents server (130) associated with at least one contents provider, **characterised in that** said device for optimising the bit rate comprises a reprogrammable computing machine (402) or a dedicated computing machine (402) able and configured to:

   • receive at least one request to obtain at least one file representing at least one available quality corresponding to a bit rate for at least one chunk of at least one of said multimedia contents, called a multimedia description file, said request being sent by at least one user terminal of said plurality of user terminals to access said at least one multimedia content;
   • obtain said at least one multimedia description file;
   • modify said at least one multimedia description file on the basis of at least one piece of information representing a quality of delivery of said at least one multimedia content, to the at least one user terminal, called a piece of information on quality of delivery, said modification comprising an elimination, for at least one chunk of said at least one multimedia content, of at least one available quality corresponding to a bit rate higher than a preliminarily obtained average bit rate $Q_{av}$, said sub-step of elimination being implemented when a maximum bit rate $Q_i^{max}$ borne by said at least one user terminal is higher than said average bit rate $Q_{av}$, said at least one eliminated available quality corresponding to a bit rate higher than said average bit rate $Q_{av}$ to which a margin $Q_{diff}$ is added, said margin $Q_{diff}$ being decremented at a subsequent implementation of said elimination, said modification delivering at least one modified multimedia description file; and
   • transmit said at least one modified multimedia description file to said at least one user terminal in response to said at least one request.

**Figure 1a**

**Figure 1b**

EP 3 437 292 B1

Figure 2a

Figure 2b

Figure 2c

E101
E102
E103
E206
E201'
E204
E205
E105
E106

300

301

302

303

304

Figure 3

200
402
401
403

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2012124179 A

**Littérature non-brevet citée dans la description**

• **J. FAJARDO ; I. TABOADA ; F. LIBERAL.** Improving content delivery efficiency through multi-layer mobile edge adaptation. IEEE, Novembre 2015, vol. 29, 40-46